# EUROPÄISCHE PATENTSCHRIFT

(11) **EP 2 965 888 B1**
(45) Veröffentlichungstag und Bekanntmachung des Hinweises auf die Patenterteilung: **18.07.2018**
(21) Anmeldenummer: 15171907.7
(22) Anmeldetag: 12.06.2015
(51) Int. Cl.: B29C 35/02, B29C 35/08, B29C 63/00, B32B 37/06

(54) **VORRICHTUNG ZUR ERWÄRMUNG EINER FUNKTIONSSCHICHT**
DEVICE FOR HEATING A FUNCTIONAL LAYER
DISPOSITIF DE CHAUFFAGE D'UNE COUCHE FONCTIONNELLE

(30) Priorität: 11.07.2014 DE 102014213533
(43) Veröffentlichungstag der Anmeldung: 13.01.2016
(73) Patentinhaber: HOMAG GmbH, 72296 Schopfloch (DE)
(72) Erfinder: Rohde, Domingo, 24111 Kiel (DE)
(74) Vertreter: Grauel, Andreas

(56) Entgegenhaltungen:
- EP-A2- 1 346 825
- DE-A1-102007 055 661
- US-A- 3 235 931

## Beschreibung

### Technisches Gebiet

Die Erfindung betrifft eine Vorrichtung zur Erwärmung einer Funktionsschicht eines Beschichtungsmaterials, wie einer Oberflächenbeschichtung oder eines Kantenbandes, insbesondere zum Aufbringen des Beschichtungsmaterials auf eine Fläche eines Werkstücks.

### Stand der Technik

Im Stand der Technik ist es bekannt, auf Werkstücke Beschichtungen aufzubringen. Dabei sind die Werkstücke beispielswiese insbesondere plattenförmige oder dreidimensional aus Holz, Holzwerkstoffen, Kunststoff oder ähnlichem hergestellte Elemente, wie sie beispielsweise im Möbelbau oder bei der Herstellung von Bauelementen, wie beispielsweise Fußbodenelementen, verwendbar sind.

Die Beschichtungen sind dabei flächige Beschichtungen zur Beschichtung von zumindest einer flächigen Breitseite des Werkstücks oder so genannte Kantenbänder zur Beschichtung von zumindest einer Schmalseite des Werkstücks.

Dabei ist es bekannt, dass die Beschichtungen aus einer Oberflächenschicht und einer Funktionsschicht besteht, wobei die Funktionsschicht zum Verbinden der Beschichtung mit dem Werkstück dient. Dazu ist die Funktionsschicht zu aktivieren, damit sie ihre klebenden Eigenschaften annimmt, so dass der Fügeprozess gezielt vorgenommen werden kann.

Im Stand der Technik ist die Aktivierung der Funktionsschicht mittels Laserstrahlen oder mittels heißer Druckluft bekannt. Die Aktivierung mittels Laserstrahlen hat ihre Vorteile in der punktgenauen Applizierung des Laserstrahls zur punktgenau gesteuerten Aktivierung. Die Vorrichtung zur Aktivierung mittels Laserstrahlen hat jedoch den Nachteil, dass die Anwendung ihre Vorteile eher erst bei hohen Stückzahlen zeigt. Auch ist es nachteilig, dass die durch den Laser applizierte Energie nur auf die Oberfläche bzw. in einer vordefinierten geringen Eindringtiefe zwischen nur etwa 1µm und 100µm wirkt und dann mittels Wärmeleitung in die Tiefe der Funktionsschicht weitergeleitet werden muss, um eine gleichmäßige Erwärmung oder Aktivierung der Funktionsschicht zu erreichen.

Auch ist die Aktivierung über heiße Druckluft im Stand der Technik bekannt. Die DE 10 2011 015 898 offenbart eine Vorrichtung zur Erzeugung heißer Druckluft, welche auf ein Kantenband geströmt wird, um die Funktionsschicht zu erwärmen und damit zu aktivieren. Dabei wird eine erhebliche Menge Druckluft auf hohe Temperaturen zu erwärmen sein, um die Funktionsschicht im Durchlauf durch die Vorrichtung zu erwärmen oder zu aktivieren. Solche Vorrichtungen verbrauchen erhebliche Energiemengen, um die benötigten hohen Luftmengen auf über 400°C zu erwärmen, wobei ein großer Teil der Energie aufgrund der Gestaltung der Vorrichtung im Wärmeübertrager über beispielsweise Wärmestrahlung oder ähnliches parasitär abgeführt wird. Auch bewirkt der hochvolumige heiße Luftstrom, dass die Umgebung der Vorrichtung hohen Temperaturen ausgesetzt ist, was einen erheblichen Aufwand an Klimatisierung nach sich zieht. Auch zeigen die Vorrichtungen zur Aktivierung mittels Heißluft einen hohen Geräuschpegel bei der Erzeugung und Ausströmung der unter Druck stehenden Heißluft, was für das Bedienpersonal der Vorrichtung nachteilig ist und einen erheblichen Aufwand für die Geräuschdämmung nach sich zieht. Bei der Nutzung von Heißluft zeigt sich, dass aufgrund der hohen Heißlufttemperaturen die obere Schicht der Funktionsschicht bei einer Temperatur der Heißluft von 400°C bis 500°C stark verflüssigt wird und durch die starke Luftströmung teilweise von der Funktionsschicht abgelöst wird. Diese abgelösten Teile der Funktionsschicht finden sich als Verschmutzungen auf den umliegenden Bauteilen wieder und reduzieren die zur Verklebung verfügbare Klebermenge. Auch ist es nachteilig, dass die durch die Heißluft applizierte Energie nur auf die Oberfläche wirkt und dann mittels Wärmeleitung in die Tiefe der Funktionsschicht weitergeleitet werden muss, um eine durchgängige Erwärmung der Funktionsschicht auf eine Temperatur von im Wesentlichen der Prozesstemperatur oder mehr zu erreichen. Dabei entsteht ein starker Temperaturgradient zwischen der Oberfläche der Funktionsschicht und der Rückseite der Funktionsschicht, die an die Dekorschicht des Beschichtungsmaterials grenzt.

Wird eine Mikrowellenstrahlung für die Erwärmung der Funktionsschicht eingesetzt, so kann eine Erwärmung der Funktionsschicht des Beschichtungsmaterials auch in der Tiefe erfolgen, da die Mikrowellenstrahlung das Material der Funktionsschicht durchdringen kann.

Bei der Verwendung von Mikrowellenstrahlung kann es gegebenenfalls nachteilig sein, wenn die Vorrichtung durch im Betrieb aufgeschmolzenes Material der Funktionsschicht verschmutzt wird. Diese Verschmutzung erfolgt dabei gegebenenfalls in einem Materialkanal, welcher der Mikrowellenstrahlung ausgesetzt ist, was dazu führt, dass die Verschmutzungselemente dauerhaft der Mikrowellenstrahlung ausgesetzt sind und überhitzen können, was zu einer Schädigung der Funktionsschicht führen kann, so dass eine sichere Verklebung mit dem Werkstück nicht mehr gewährleistet werden könnte. Verbleibt beispielsweise Material der Funktionsschicht im Applikator, so hat dies unter anderem die Konsequenz, dass sich das Material der Funktionsschicht über die Zeit immer stärker erwärmt, so dass die Gefahr besteht, dass das Material der Funktionsschicht überhitzt. Auch kann das Material der Funktionsschicht den Applikator verstimmen, was zur Folge hätte, dass die Erwärmung der Funktionsschicht reduziert werden würde.

Die EP 1 346 825 A2 offenbart eine Vorrichtung zum Laminieren eines Films mittels Mikrowellenstrahlung. Eine solche Vorrichtung entspricht im Wesentlichen dem Oberbegriff von Anspruch 1.

### Darstellung der Erfindung, Aufgabe, Lösung, Vorteile

Es ist die Aufgabe der Erfindung, eine Vorrichtung zur Erwärmung einer Funktionsschicht eines Beschichtungsmaterials, wie einer Oberflächenbeschichtung oder eines Kantenbandes, zum Aufbringen des Beschichtungsmaterials auf eine Fläche eines Werkstücks, zu schaffen, die einfach und unkompliziert und kompakt ausgebildet ist und dennoch hinsichtlich einer unbeabsichtigten Verschmutzung insbesondere im Betrieb der Vorrichtung geschützt ist.

Diese Aufgabe wird mit den Merkmalen von Anspruch 1 gelöst.

Ein Ausführungsbeispiel der Erfindung betrifft eine Vorrichtung zur Erwärmung einer Funktionsschicht eines Beschichtungsmaterials, wie einer Oberflächenbeschichtung oder eines Kantenbandes, zum Aufbringen des Beschichtungsmaterials auf eine Fläche eines Werkstücks, mit einer Mikrowellenquelle, einem Applikator und einem Mikrowellenkanal zur Zuführung der in der Mikrowellenquelle erzeugten Mikrowellenstrahlung zu dem Applikator, wobei in dem Applikator ein Mikrowellenfeld aufgrund der zugeführten Mikrowellenstrahlung erzeugbar ist, wobei der Applikator zumindest einen Materialkanal aufweist, welcher den Applikator durchquert und durch welchen das Beschichtungsmaterial durchführbar ist, so dass die Funktionsschicht des Beschichtungsmaterials im Mikrowellenfeld innerhalb des Applikators erwärmbar oder aktivierbar ist, wobei der Materialkanal eine Einlassöffnung und eine Auslassöffnung für das durch den Materialkanal durchzuführende Beschichtungsmaterial aufweist, mit einer Reinigungsvorrichtung zur Entfernung von Verschmutzungen aus dem Materialkanal, wobei eine Spülvorrichtung vorgesehen ist, mittels welcher der Materialkanal mit einem Fluid spülbar ist. Dadurch kann eine Verschmutzung aus dem Materialkanal ausgetragen und entfernt werden, wobei damit insbesondere auch Verschmutzungen des Materialkanals von Material der Funktionsschicht entfernbar sind.

Gemäß dem Erfindungsgedanken ist es vorteilhaft, wenn die Reinigungsvorrichtung ein durch den Materialkanal durchlaufendes Band aufweist, welches mittels einer Antriebsvorrichtung durch den Materialkanal transportierbar ist. Da die auftretenden Verschmutzungen im ständigen Betrieb der Vorrichtung auftreten können, ist es bevorzugt, wenn das Band im Wesentlichen ständig oder intermittierend durch den Materialkanal führbar ist, um Verschmutzungen auszutragen.

Erfindungsgemäß ist es zweckmäßig, wenn die Reinigungsvorrichtung eine Reinigungseinheit aufweist, mittels welcher Verschmutzungen von dem Band entfernbar sind. So kann die Verschmutzung mittels des Bandes aus dem Materialkanal geführt werden und dann von dem Band entfernt werden, insbesondere bevor dieses wieder in den Materialkanal führbar ist.

Dabei ist es insbesondere vorteilhaft, wenn die Reinigungseinheit ein Abstreifer ist oder aufweist, an welchem das Band vorbei geführt wird, so dass die Verschmutzung vom Band abstreifbar ist. So kann bauraumsparend die Verschmutzung im Vorbeilauf des Bandes vom Band entfernt werden, was auch Zeit einspart.

Ebenso ist es dabei vorteilhaft, wenn das Band ein endlos umlaufendes geschlossenes Band oder ein offenes Band ist. Bei dem geschlossenen umlaufenden Band ist es vorteilhaft, weil dieses Band im Wesentlichen dauerhaft durch den Materialkanal geführt werden kann, was eine effektive Reinigung bewirkt. Bei einem offenen Band kann vorteilhaft ein längeres Band eingesetzt werden, was den Verschleiß am Band reduziert bzw. auf eine größere Länge verteilt.

Besonders vorteilhaft ist es, wenn das Band zwischen dem Beschichtungsmaterial und einer Wandung des Materialkanals in dem Materialkanal angeordnet und durch diesen führbar ist. So kann der Kanal bzw. die Wandung des Kanals vor Verschmutzung geschützt werden, die ansonsten mit Material der Funktionsschicht besonders verschmutzt werden würde.

Auch ist es vorteilhaft, wenn das Band zwischen der Funktionsschicht des Beschichtungsmaterials und einer Wandung des Materialkanals in dem Materialkanal angeordnet und durch diesen führbar ist. So kann sich von der Funktionsschicht entfernendes Material gut aufgefangen und abtransportiert werden.

Besonders vorteilhaft ist es, wenn das Band in Kontakt mit der Wandung des Materialkanals ist. So kann das Band einfach geführt werden, so dass es gleichmäßig flach durch den Materialkanal führbar ist und möglichst die Funktionsschicht nicht berührt.

Dazu ist es vorteilhaft, wenn das Band beabstandet von dem Beschichtungsmaterial geführt ist. So kann erreicht werden, dass das Band die Funktionsschicht nicht berührt und Material davon abstreift.

Auch ist es vorteilhaft, wenn das Band einen Träger und gegebenenfalls eine Beschichtung aufweist. Dadurch wird erreicht, dass der Träger die Stabilität des Bandes bewirkt und die Beschichtung die Anhaftung des abzutransportierenden Materials fördert.

So ist es auch vorteilhaft, wenn das Band oder der Träger eine Faserstruktur aufweist. Dadurch kann eine erhöhte Stabilität und Dauerhaltbarkeit erreicht werden.

Besonders vorteilhaft ist es, wenn das Band, der Träger oder die Beschichtung aus PTFE besteht oder dieses aufweist. Dadurch kann eine gute Anhaftung und ein gutes Abstreifen von dem Band erreicht werden.

Für die einfache Führung im Materialkanal und die berührungsfreie Führung im Materialkanal ist es vorteilhaft, wenn das Band eine Dicke von etwa 0,05 mm bis 0,3 mm hat, vorzugsweise etwa 0,1 mm.

Damit sich das Band nicht übermäßig im Mikrowellenfeld erwärmt, ist es vorteilhaft, wenn das Band einen Absorptionskoeffizienten für Mikrowellenstrahlung von 2,45 GHz oder 5,8 GHz von kleiner als 0,1 hat. Dadurch wird erreicht, dass die Energieaufnahme des Bandes begrenzt und gering ist, während es durch den Materialkanal geführt wird. Dadurch kann es sich wieder abkühlen, wenn es aus dem Materialkanal geführt wird. Dabei unterstützt die geringe Dicke den Abkühlprozess weiterhin.

Für die Führung und die Reinigung und Kühlung ist es vorteilhaft, wenn das Band im Kreis umlaufend antreibbar ist. So kann das Band auf kurzer Strecke durch den Materialkanal geführt, ausgeführt und gereinigt werden, bevor es wieder in den Materialkanal geführt wird.

Auch ist es anderweitig vorteilhaft, wenn zwei Rollen vorgesehen sind, wobei das Band auf eine Rolle aufwickelbar ist und von der anderen Rolle abwickelbar ist. Dabei kann dies alternierend erfolgen, so dass das Band erst von der einen Rolle abgewickelt und auf die andere Rolle aufgewickelt wird, so dass anschließend das Band von der anderen Rolle abgewickelt und auf die eine Rolle aufgewickelt wird. So kann auf einfache Weise ein Band verwendet werden, dass nicht endlos ausgebildet ist.

Gemäß eines weiteren erfindungsgemäßen Gedankens ist es vorteilhaft, wenn eine Mehrzahl von Materialkanälen vorgesehen ist, wobei für jeweils einen Materialkanal ein Band vorgesehen ist oder ein Band für alle Materialkanäle. So kann bei Verwendung je eines Bandes pro Materialkanal dieses gezielt angesteuert werden, auch bei Ausfall oder Stillstand in einem anderen Materialkanal. Wenn ein Band für alle Materialkanäle verwendet wird, kann der Antrieb kostengünstig ausgeführt werden.

Gemäß einem weiteren erfindungsgemäßen Gedanken ist es vorteilhaft, wenn eine Benetzungsvorrichtung vorgesehen ist, mittels welcher das Band mit einem Trennmittel benetzbar ist. So kann erreicht werden, dass die Materialanhaftung nicht so stark ist, so dass das Abstreifen einfach und zuverlässig durchgeführt werden kann.

Dabei ist es vorteilhaft, wenn die Benetzungsvorrichtung der Reinigungseinheit in Bandlaufrichtung nachgeordnet ist. So kann erst das Band abgestreift werden und dann benetzt werden, so dass das Trennmittel auf das Band aufgebracht ist, bevor es in den Materialkanal eingeführt wird.

Erfindungsgemäß ist eine Spülvorrichtung vorgesehen, mittels welcher der Materialkanal mit einem Fluid spülbar ist. Dadurch kann eine gewisse Kühlung des Bandes erreicht werden, wobei vorteilhaft die Temperatur des Fluids, wie der Spülluft, zwischen Raumtemperatur und der Prozesstemperatur, also der Temperatur der Funktionsschicht, ist.

Dabei ist es besonders vorteilhaft, wenn die Spülvorrichtung das Fluid, wie insbesondere Luft, zwischen die Funktionsschicht und das Band leitet. So kann das Band einfach gekühlt werden.

Auch ist es vorteilhaft, wenn das Band in Laufrichtung des Beschichtungsmaterials oder entgegen der Laufrichtung des Beschichtungsmaterials durch den Materialkanal antreibbar ist.

Gemäß einem weiteren erfindungsgemäßen Gedanken ist es vorteilhaft, wenn eine Überwachungsvorrichtung vorgesehen ist, mittels welcher das Band überwachbar ist, wie insbesondere auf Beschädigungen überwachbar ist.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigen:
- Figur 1: eine Ansicht einer erfindungsgemäßen Vorrichtung zur Erwärmung einer Funktionsschicht,
- Figur 2: eine seitliche Ansicht eines Applikators,
- Figur 3: eine Ansicht eines Applikators von oben,
- Figur 4: eine Ansicht eines Applikators von hinten,
- Figur 5: eine Ansicht eines Applikators von vorn,
- Figur 6: eine Vorrichtung mit einem Ausführungsbeispiel einer Reinigungsvorrichtung, und
- Figur 7: eine Vorrichtung mit einem weiteren Ausführungsbeispiel einer Reinigungsvorrichtung.

### Bevorzugte Ausführung der Erfindung

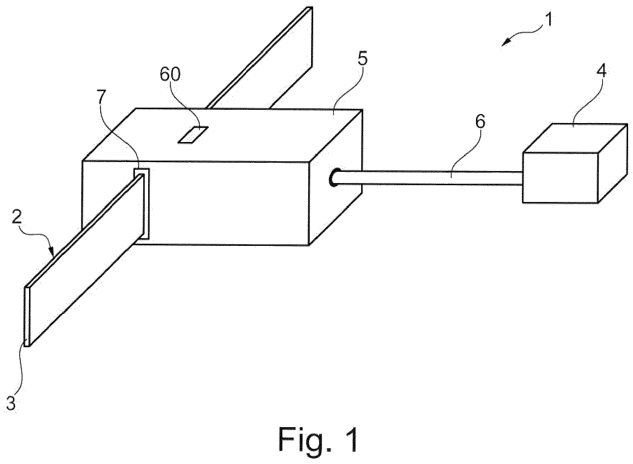

Figur 1 zeigt in einer schematischen Darstellung eine erfindungsgemäße Vorrichtung 1 zur Erwärmung einer Funktionsschicht 2 eines Beschichtungsmaterials 3. Dabei wird der Begriff Erwärmung einer Funktionsschicht auch als Aktivierung eine Funktionsschicht verstanden. Diese Begriffe werden im Weiteren als gleichwertig bzw. gleichbedeutend verwendet.

Dabei ist das Beschichtungsmaterial insbesondere ein Kantenband, welches auf ein Werkstück an einer Schmalseite aufbringbar ist oder insbesondere ein eher flächiges Beschichtungsmaterial, welches auch auf eine eher flächige Breitseite eines Werkstücks aufbringbar ist.

Die Erwärmung oder Aktivierung der Funktionsschicht 2 dient dem Aufbringen und insbesondere dem dauerhaften Befestigen des Beschichtungsmaterials 3 auf einer Fläche des Werkstücks. Dabei wird die Funktionsschicht derart aktiviert, dass sie eine Art Kleber bildet oder bewirkt, mittels welchem das Beschichtungsmaterial auf der Fläche des Werkstücks verklebbar ist.

Die Vorrichtung 1 weist eine Mikrowellenquelle 4 und ein Applikator 5 auf, wobei die Mikrowellenstrahlung mittels eines Mikrowellenkanals 6 von der Mikrowellenquelle 4 zum Applikator 5 übertragen wird. Der Mikrowellenkanal 6, welcher bevorzugt als Hohlleiter oder als Koaxialkabel ausgebildet ist, dient der Zuführung der in der Mikrowellenquelle 4 erzeugten Mikrowellenstrahlung zu dem Applikator 5. In dem Applikator 5 wird dadurch ein Mikrowellenfeld erzeugt, welches von dem Beschichtungsmaterial 3 durchlaufen wird.

Der Applikator 5 weist dazu zumindest einen Materialkanal 7 auf, welcher das Mikrowellenfeld quert, und durch welchen das Beschichtungsmaterial geführt wird.

Das Mikrowellenfeld ist dabei derart ausgebildet oder ansteuerbar, dass beim Durchlaufen des Beschichtungsmaterials durch das Mikrowellenfeld, die Funktionsschicht des Beschichtungsmaterials erwärmt oder aktiviert wird.

Das Beschichtungsmaterial besteht dabei zumindest aus zwei Schichten, wovon eine Schicht die Funktionsschicht ist, welche erwärmt bzw. aktiviert wird, wobei die zumindest eine andere Schicht, welche im Nachfolgenden als Dekorschicht bezeichnet wird, möglichst nicht oder nicht so stark erwärmt wird.

Die Funktionsschicht und die Dekorschicht können jeweils auch aus einem entsprechenden eigenen Schichtaufbau aus mehreren einzelnen Schichten bestehen. So können die Funktionsschicht und/oder die Dekorschicht des Beschichtungsmaterials aus zumindest einer Schicht oder aus einer Mehrzahl von Schichte bestehen.

Die Funktionsschicht und die Dekorschicht weisen jeweils einen Verlustfaktor ε"_{eff} auf, welcher als Verlustfaktor des jeweiligen Materials der Funktionsschicht und der Dekorschicht betrachtet wird. Dabei ist der Verlustfaktor der Imaginärteil der komplexen relativen Dielektrizitätskonstante des jeweiligen Materials.

Dabei wird der Verlustfaktor ε"_{eff} (FS) der Funktionsschicht oder der Verlustfaktor ε"_{eff} (DS) der Dekorschicht für Frequenzen (ISM) bei 915MHz, 2,45 GHz oder 5,8 GHz angegeben.

Das Verhältnis R = ε"_{eff} (FS) / ε"_{eff} (DS) bei einer der angegebenen Frequenzen von 915MHz, 2,45 GHz oder 5,8 GHz definiert das Verhältnis der Verlustfaktoren.

Dabei ist das Beschichtungsmaterial derart spezifiziert, dass R > 1, vorzugsweise R > 10 gilt. Dies bewirkt, dass sich die Funktionsschicht FS sich wesentlich stärker erwärmt als die Dekorschicht des Beschichtungsmaterials, so dass es zu einer selektiven Erwärmung des Beschichtungsmaterials kommt, insbesondere bei einer Anwendung von Mikrowellenapplikatoren bei den ISM-Frequenzen von 915MHz oder 2,45GHz oder 5,8GHz.

Insbesondere bei einer Einstellung des Applikators als Applikator mit einer laufenden Welle ist R > 1 und ε"_{eff} (FS) >1. Bei einem resonanten Applikator ist R > 1 und ε"_{eff} (FS) < 50.

Dabei ist der Applikator von der Mikrowellenquelle mit Mikrowellenstrahlung einer Leistung von 0,1 kW bis etwa 50kW beaufschlagt. Daraus resultiert je nach Verlustfaktor des jeweiligen Materials eine Erwärmung des jeweiligen Materials der Funktionsschicht bzw. der Dekorschicht. Die Erwärmung der Funktionsschicht ist dabei größer als die Erwärmung der Dekorschicht, so dass die Dekorschicht nicht oder gegebenenfalls nur geringfügig erwärmt wird, während die Funktionsschicht auf Prozesstemperatur erwärmt wird.

Werden mehrere Applikatoren verwendet, so kann jeder Applikator von der gleichen Mikrowellenquelle gespeist werden oder alternativ kann jeder Applikator von einer separaten Mikrowellenquelle gespeist werden. Auch können Gruppen von Applikatoren oder von Applikatorsegmenten von einer Mikrowellenquelle gespeist werden oder von einer Mehrzahl von Mikrowellenquellen gespeist werden.

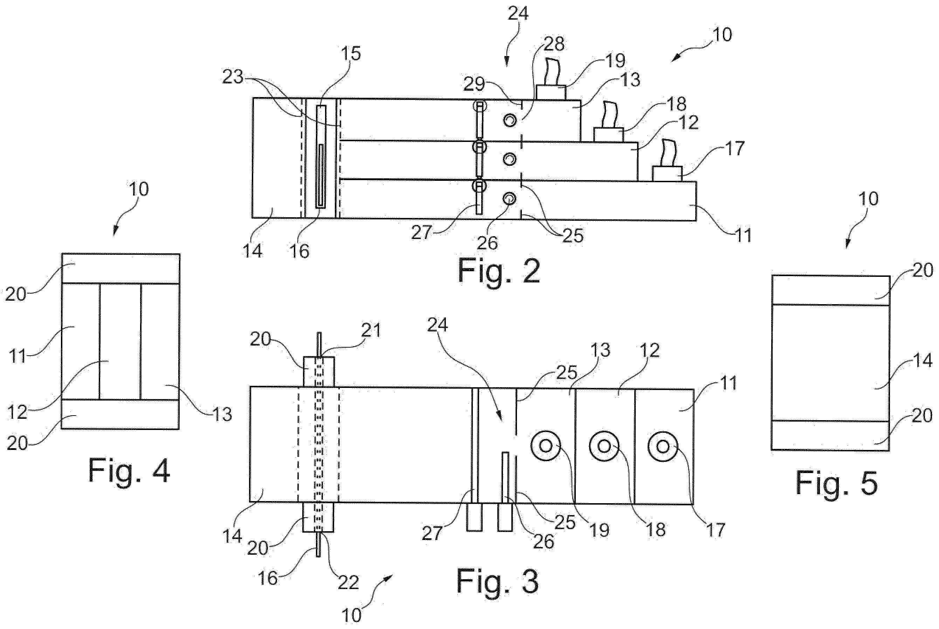

Die Figuren 2 bis 5 zeigen jeweils verschiedene Ansichten eines erfindungsgemäßen Applikators 10 in einer ersten Betriebsstellung. Die Figur 2 zeigt den Applikator in einer Seitenansicht, die Figur 3 in einer Draufsicht von oben, die Figur 4 in einer hinteren Ansicht und die Figur 5 in einer vorderen Ansicht.

Der Applikator 10 weist drei Applikatorsegmente 11, 12, 13 auf, die übereinander angeordnet sind. Die Applikatorsegmente 11, 12, 13 sind Hohlräume, in welche eingangsseitig die Mikrowellenstrahlung eingespeist wird und die in eine Kammer 14 münden, in welcher der Materialkanal 15 vorgesehen ist, welcher einen Kanal bildet, um das Beschichtungsmaterial durch die Kammer 14 führen zu können. In der Kammer 14 bildet sich eine laufende oder eine stehende Welle der Mikrowellenstrahlung aus und kann bei der Durchführung des Beschichtungsmaterials 16 dieses je nach Verlustfaktor erwärmen oder aktivieren.

Die Applikatorsegmente 11,12, 13 sind dabei übereinander angeordnet und am hinteren Ende abgestuft ausgebildet, so dass der Anschluss eines Mikrowellenkanals 17, 18, 19 auf einer Oberseite des jeweiligen Applikatorsegments 11, 12, 13 möglich ist. Der Mikrowellenkanal 17, 18, 19 ist dabei bevorzugt ein Hohlleiter und/oder ein Koaxialkabel. Dabei kann es vorteilhaft sein, wenn ein Hohlleiter verwendet wird, dass der Hohlleiter in Segmente unterteilt ist.

Seitlich des Materialkanals 15 ist dieser beidseitig mit einer Vorrichtung 20 als Drossel versehen, welche das Austreten der Mikrowellenstrahlung abschwächt oder gänzlich abschirmt. Der Materialkanal 15 ist dabei derart ausgebildet, dass er durch den zumindest einen Applikator 10 und/oder durch das zumindest eine Applikatorsegment 11, 12, 13 verläuft, wobei der Materialkanal 15 eine Einlassöffnung 21 und eine Auslassöffnung 22 aufweist, welche dazu dienen, das Beschichtungsmaterial 16 in den Materialkanal 15 einzulassen und es wieder auszulassen. Der Materialkanal 15 weist dazu eine umlaufende Wand 23 auf, welche den Materialkanal 15 von dem Innenraum 14 des Applikators 10 oder von dem Innenraum des jeweiligen Applikatorsegments 11, 12, 13 trennt.

Die Figuren 2 bis 5 zeigen einen Applikator 10 mit drei Applikatorsegmenten 11 bis 13. Alternativ können auch mehrere Applikatoren oder ein oder mehrere Applikatoren vorgesehen sein mit einem oder mehreren Applikatorsegmenten. Dabei kann es vorteilhaft sein, wenn zumindest ein Applikator 10 oder alle Applikatoren ein Applikatorsegment 11, 12, 13 oder eine Mehrzahl von Applikatorsegmente 11, 12, 13 aufweisen. So kann die Mikrowellenstrahlung auf die jeweiligen Applikatoren oder auf die jeweiligen Applikatorsegmente verteilt werden, so dass die Erwärmung des Beschichtungsmaterials im Materialkanal an die Bedürfnisse angepasst werden kann.

Dabei kann die Verteilung der Mikrowellenstrahlung beispielsweise über die Höhe des Beschichtungsmaterials veränderlich sein. Beispielsweise kann der obere und/oder der untere Rand des Beschichtungsmaterials stärker oder weniger stark erwärmt werden als ein mittlerer Bereich.

Die Figuren zeigen einen Applikator mit einem Materialkanal, der durch den Applikator führt, durch welchen das Beschichtungsmaterial durchgeführt wird. Erfindungsgemäß kann durch den zumindest einen Applikator auch eine Mehrzahl von Materialkanälen geführt sein, die hintereinander und/oder übereinander angeordnet sein können. Dadurch können gleichzeitig mehrere Bänder, Streifen oder Bahnen von Beschichtungsmaterial erwärmt werden. Dies mag bei einer Vorrichtung vorteilhaft sein, bei der gleichzeitig mehrere solcher erwärmter Beschichtungsmaterialien verarbeitet werden. So können gleichzeitig mehrere Werkstücke beschichtet werden oder es kann ein Werkstück an mehreren Seiten beschichtet werden.

In Figur 2 oder 3 ist weiterhin zu erkennen, dass im Applikator bzw. in den Applikatorsegmenten 11, 12, 13 jeweils eine Blende 24 vorgesehen ist. Diese Blende dient dazu, die Form der Resonanzkurve des Applikators bzw. des Applikatorsegments einzustellen. Wenn die Blende 24 größer gestellt wird, verschiebt sich die Charakteristik des Applikators bzw. des Applikatorsegments von einem resonanten System mit stehender Welle zu einem System mit laufender Welle. Die Blende 24 besteht dabei bevorzugt aus einer Art Lochblende 25, welche in ihrem Durchlassquerschnitt veränderlich ist und/oder aus einem veränderlichen Metallelement 26, wie beispielsweise einem metallischen Dorn, welcher der Beeinflussung der Mikrowellenstrahlung dient.

Sowohl die Lochblende 25 als auch das Metallelement 26 ist/sind dabei bevorzugt verstellbar ausgebildet, um die Charakteristik des Applikators 10 oder des Applikatorsegments 11, 12, 13 auf die jeweiligen Anforderungen einstellen zu können.

Die Blende 24 ist, wie es die Figur 2 zeigt, zwischen der Mikrowellenquelle und dem Applikator oder dem Applikatorsegment oder in dem Applikator oder in dem Applikatorsegment angeordnet. Sie ist bevorzugt der Modulationsvorrichtung 27 vorgeschaltet. Alternativ könnte sie jedoch auch der Modulationsvorrichtung nachgeordnet sein.

Die Blende 24 als Lochblende 25 weist dabei eine Öffnung 28 auf, insbesondere eine Öffnung 28 in einer Metallwandung 29 ist. Dabei ist bevorzugt der Öffnungsquerschnitt der Öffnung 28 der Blende veränderlich einstellbar.

Auch das als Blende wirkende Metallelement 26, welches in die Öffnung des Applikatorsegments ragt, ist bevorzugt einstellbar. Dabei kann der Grad des Hineinragens, also die Eindringtiefe des Metallelements in die Öffnung, einstellbar sein.

Das Metallelement 26 ist bevorzugt der Lochblende 25 nachgeordnet. Alternativ könnte es jedoch auch der Lochblende 25 vorgeschaltet sein. Dabei könnte ein Metallelement vorgesehen sein oder es können alternativ auch mehrere Metallelemente vorgesehen sein. Das bzw. diese können innerhalb und/oder außerhalb des Applikators angeordnet sein.
Erfindungsgemäß ist das Metallelement ein Metallbolzen, der in das Applikatorsegment hineinragt.

Weiterhin ist in den Figuren 2 und 3 zu erkennen, dass in zumindest einem Applikator 10 und/oder in zumindest einem Applikatorsegment 11, 12, 13 eine Modulationsvorrichtung 27 zur Einstellung der Modulation der Mikrowellenstrahlung vorgesehen ist. Die Modulationsvorrichtung 27 ist dabei als Art Klappe ausgebildet, welche die Mikrowellenstrahlung derart beeinflusst, dass sie die Resonanzfrequenz des Resonators des Applikators bzw. des Applikatorsegments 11, 12, 13 an die Resonanzfrequenz des Magnetrons, also der Mikrowellenquelle, anpasst.

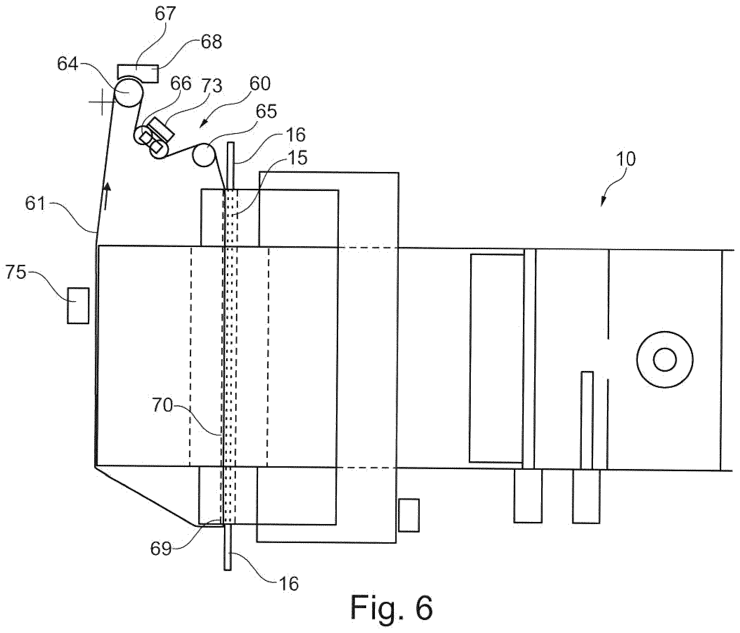

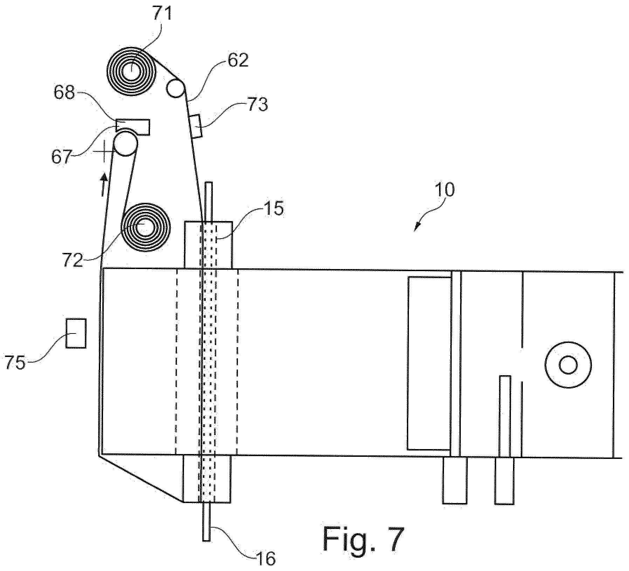

In den Figuren 2 und 3 ist die Modulationsvorrichtung 27 als Art Klappe ausgebildet. Diese Modulationsvorrichtung 27 ist in den Figuren 2 und 3 nach unten eingestellt. In den Figuren 6 und 7 ist die Modulationsvorrichtung 27 nach oben geklappt eingestellt.

In den Figuren 2 und 3 ist der zumindest eine Materialkanal 15 in dem Applikator 10 oder alternativ auch in dem Applikatorsegment feststehend angeordnet, wobei das Mikrowellenfeld veränderlich in dem Applikator10 und/oder in dem Applikatorsegment einstellbar ist

Alternativ dazu kann der zumindest eine Materialkanal 15 in dem Applikator 10 oder in dem Applikatorsegment auch verlagerbar einstellbar sein, um das Beschichtungsmaterial in dem Mikrowellenfeld einstellen zu können. Dabei ist der Materialkanal und/oder das Mikrowellenfeld derart einstellbar, dass eine Funktionsschicht des Beschichtungsmaterials in einem Bereich maximaler elektrischer Feldstärke anordenbar oder in diesem Bereich durchführbar ist.

Das Beschichtungsmaterial wird dabei mittels eines Antriebs durch den Materialkanal geführt. Dabei kann der Antrieb an dem Applikator angebracht oder diesem zugeordnet sein. Alternativ kann der Antrieb auch ein Antrieb einer Vorrichtung sein, die das Beschichtungsmaterial auf das Werkstück aufbringt. So kann der Antrieb Teil einer Kantenverleimvorrichtung sein, wenn das Beschichtungsmaterial beispielsweise eine Kante ist, die auf die Schmalseite eines Werkstücks aufgebracht werden kann. Dabei kann dem Applikator auch eine Andruckvorrichtung nachgeordnet werden, um das Beschichtungsmaterial auf das Werkstück zu applizieren und dort anzupressen.

In den Figuren 2 und 3 sind die Applikatorsegmente 11, 12, 13 in der Höhe gleich ausgebildet. Alternativ kann ein Applikator 10 auch in mehrere Applikatorsegmente 11, 12, 13 unterteilt sein, wobei die Applikatorsegmente 11, 12, 13 auch unterschiedliche geometrische Abmessungen bzw. Höhen aufweisen können. Dabei kann ein Applikator in mehrere Applikatorsegmente unterteilt sein, wobei sich zumindest einzelne der Applikatorsegmente in der Höhe und/oder in der Breite unterscheiden können. Dadurch kann der Energieeintrag in das Beschichtungsmaterial als Funktion der Höhe bzw. Breite moduliert werden.

Zur Modulation der Erwärmung bzw. der Aktivierung des Beschichtungsmaterials kann es auch vorteilhaft sein, wenn der Applikator oder die Applikatoren oder das Applikatorsegment oder die Applikatorsegmente austauschbar sind. So können die Applikatoren oder die Applikatorsegmente in verschiedenen Höhen oder Breiten eingesetzt werden, um an das Beschichtungsmaterial angepasst zu sein.

Der Materialkanal 15 ist als durchgehender Spalt mit einer umlaufenden Wand 23 ausgebildet. Dabei ist der Materialkanal 15 aus einem Material hergestellt, welches zumindest eines der folgenden Materialen ist oder eines der Materialien aufweist: PTFE, Keramik, Glas, technisches Glas, und/oder Quarzglas. Dabei kann der Materialkanal 15 beispielsweise aus PTFE, wie Teflon, hergestellt sein und als PTFE-Block in den Applikator 10 eingesetzt sein.

Auch kann der Materialkanal 15 innen mit einem Material beschichtet sein, welches eines der folgenden Materialien ist oder eines der Materialien aufweist: PTFE, Keramik, Glas, technisches Glas und/oder Quarzglas.

Auch kann der Applikator 10 oder die Applikatoren oder das Applikatorsegment oder die Applikatorsegmente 11, 12, 13 innen mit einem Material beschichtet oder ausgefüllt sein, welches eines der folgenden Materialien ist oder eines der Materialien aufweist: PTFE, Keramik, Glas, technisches Glas, und/oder Quarzglas.

Auch kann eine Führungsvorrichtung im Materialspalt 15 vorgesehen sein, welche als Führungsschienen ausgebildet sind und unten und oben in dem Materialspalt 15 angeordnet sind. Dabei durchqueren die Führungsschienen den Materialspalt 15, so dass das Beschichtungsmaterial auf seinem Weg durch den Materialspalt geführt ist. Die beiden Führungsschienen oder im Allgemeinen die Führungsvorrichtung ist auf die Höhe bzw. Breite des Beschichtungsmaterials einstellbar, so dass auch unterschiedlich hohe oder breite Beschichtungsmaterialien, wie beispielsweise Bänder durch den Materialspalt führbar sind. Die Führungsvorrichtung dient der Führung des Beschichtungsmaterials und hat weiterhin den Vorteil, dass in dem Bereich, in welchem das Beschichtungsmaterial in die Führungsvorrichtung eingreift, die Erwärmung nicht so hoch ist als in einem mittleren Bereich. Damit wird erreicht, dass der Randbereich des Beschichtungsmaterials die Funktionsschicht stärker verkleben kann. Dabei ist der Bereich etwa 0,5 bis 4 mm breit, in welchem das Beschichtungsmaterial in die Führungsvorrichtung eingreift.

Die Führungsvorrichtung kann dabei auch federnd gelagert sein, wie insbesondere die Führungsschienen, um ein Verklemmen des Beschichtungsmaterials zu vermeiden.

Auch kann die Führungsvorrichtung, wie die obere und/oder die untere Führungsschiene an eine Spülvorrichtung angeschlossen und mit Kanälen versehen sein, um mit einem Spülmedium, wie Luft, gespült zu werden. So kann auf das Beschichtungsmaterial in seitlicher Richtung und/oder direkt von oben oder unten das Spülmedium beaufschlagt werden, um eine Überhitzung in der Führungsschiene zu vermeiden. Hierzu weisen die Führungsschienen bevorzugt in der unteren Fläche und/oder in der oberen Fläche sowie in den seitlichen Flächen Kanäle auf, durch welche das Spülmedium geleitet werden kann.

Die Spülvorrichtung umfasst einen ersten Spülmediumanschluss und einen zweiten Spülmediumanschluss, wobei der erste Spülmediumanschluss und der zweite Spülmediumanschluss dazu dienen, ein Spülmedium anzuschließen. Dieses Spülmedium, wie beispielsweise Luft, wird von den Spülmediumanschlüssen in Kanäle geleitet, die sich verteilen und im Materialkanal 15 münden, um den Materialkanal 15 und das Beschichtungsmaterial 16 im Materialkanal 15 zu spülen.

In einem Endbereich des Applikators 10 ist es vorteilhaft, wenn eine Füllung vorgesehen ist, um die dielektrischen Eigenschaften des Resonators zu beeinflussen. Dadurch kann der Resonator und der Applikator 10 im Ganzen kleiner ausgeführt werden, da die Füllung das Mikrowellenfeld derart ändert, dass eine kleinere Baulänge bei geeigneter Füllung ausreichend ist. Die Füllung ist ein optionales Merkmal, das mit den Merkmalen der anderen Ausführungsbeispiele nutzbar ist.

Besonders bevorzugt ist eine Temperaturmessvorrichtung vorgesehen, welche die Überwachung der Temperatur des Beschichtungsmaterials 16 im Materialkanal 15 und/oder am Eingang und/oder am Ausgang des Materialkanals 15 ermöglicht. Dadurch kann eine Rückkopplung zur Steuerung der Mikrowellenenergie und/oder der Resonanzfrequenz des Applikators oder der Gestalt des Mikrowellenfelds erfolgen. Dazu kann eine Mehrzahl von Temperatursensoren angeordnet sein, welche die Temperatur des Beschichtungsmaterials detektieren. Die Anzahl der Temperatursensoren kann dabei 1 bis 20 oder mehr sein. Dabei ist es besonders vorteilhaft, wenn eine kontinuierliche Messung der Temperatur der Funktionsschicht des Beschichtungsmaterials vorgenommen wird.

Damit kann beispielsweise eine Steuerung oder eine Regelung der Temperatur der Funktionsschicht als Funktion der Ausgangsleistung der Mikrowellenquelle vorgenommen werden.

Dabei kann beispielsweise der Sollwert der Temperatur der Funktionsschicht über die Länge des Kantenbandes konstant gehalten werden. Alternativ ist es zweckmäßig, wenn der Sollwert der Temperatur des Beschichtungsmaterials variiert werden kann, wobei die Variation entsprechend eines anwenderspezifischen Profils vorgenommen werden kann.

Die erfindungsgemäße Vorrichtung dient der Erwärmung oder Aktivierung eines Beschichtungsmaterials. Dabei kann der Erwärmungsprozess mittels des Mikrowellenapplikators mit anderen Heizvorrichtungen oder Heizmethoden kombiniert werden. Dabei können diese weiteren Heizvorrichtungen zur Vorwärmung und/oder zur Erreichung bzw. zum Halten der Prozesstemperatur der Funktionsschicht eingesetzt werden. Dabei kann das zu erreichende Temperaturprofil des Beschichtungsmaterials in Prozessrichtung und senkrecht zur Prozessrichtung durch die Kombination der Heizprofile der einzelnen Heizvorrichtungen erzielt werden. Zur Vorwärmung wird die Heizvorrichtung bezogen auf die Vorschubrichtung des Beschichtungsmaterials vor der Mikrowellenheizvorrichtung angeordnet. Dazu sind folgende Heizvorrichtungen geeignet: die direkte Erwärmung der Funktionsschicht über mechanischen Kontakt mit geheizten mechanischen Bauteilen, Heißluft, IR-, VIS-, oder UV-Lampen, LED- oder Laservorrichtungen oder Ultraschall. Zur Erreichung bzw. zum Halten der Prozesstemperatur der Funktionsschicht wird die zusätzliche Heizvorrichtung bezogen auf die Vorschubrichtung des Beschichtungsmaterials nach der Mikrowellenheizvorrichtung angeordnet. Hierzu sind folgende Energiequellen vorteilhaft: Heißluft, IR-, VIS-, oder UV-Lampen, LED- oder Laservorrichtungen oder Ultraschall.

Die gezeigten Applikatoren können einzeln oder in Gruppen verwendet werden. Auch können die Applikatoren einzelne Applikatorsegmente oder Gruppen davon aufweisen. Dabei können sich die Applikatorsegmente eines Applikators in der Höhe unterscheiden, um eine optimale Erwärmung von verschieden hohen Beschichtungsmaterialien, beispielsweise als Bänder, erreichen zu können. Die Anzahl der Applikatoren liegt vorzugsweise zwischen 1 und 20 oder mehr. Die Anzahl der Applikatorsegmente liegt vorzugsweise zwischen 1 und 20 oder mehr.

Die Figuren 6 und 7 zeigen einen Applikator 10 mit einer Reinigungsvorrichtung 60.
Die Reinigungsvorrichtung 60 dient der zur Entfernung von Verschmutzungen aus dem Materialkanal 15.

Dabei weist die Reinigungsvorrichtung der Figur 6 ein geschlossen umlaufendes Band 61 auf, während die Ausführungsform der Figur 7 ein offenes Band 62 aufweist, welches hin und her gespult wird und dabei in unterschiedlichen Richtungen durch den Materialkanal läuft.

Die Reinigungsvorrichtung 60 weist ein durch den Materialkanal 15 durchlaufendes Band 61, 62 auf, welches mittels einer Antriebsvorrichtung durch den Materialkanal 15 transportierbar ist. Dazu sind Führungsrollen 65 und Antriebsrollen 64 vorgesehen, welche das Band 61 gemäß Figur 6 endlos führen. Dazu ist auch eine Spannvorrichtung 66 vorgesehen, welche das Band 61 derart spannt, dass es immer gespannt durch den Materialspalt 15 verläuft.

Auch ist eine Reinigungseinheit 67 vorgesehen, mittels welcher Verschmutzungen von dem Band 61 entfernbar sind. Dabei ist die Reinigungseinheit als ein Abstreifer 68 ausgebildet, an welchem das Band 61 vorbei geführt wird, so dass die Verschmutzung vom Band abstreifbar ist.

Weiterhin ist optional eine Benetzungsvorrichtung 73 vorgesehen, mittels welcher das Band 61, 62 mit einem Trennmittel benetzbar ist, um eine Anhaftung auf dem Band derart zu erreichen, dass die aufnehmbare Verschmutzung wieder gut vom Band 61, 62 lösbar ist. Als Benetzungsmaterial kann ein fluides Material verwendet werden, wie beispielswiese Silikonöl oder ein anderes Material, welches gute Benetzungseigenschaften für PTFE aufweist, einen kleinen Absorptionskoeffizienten von kleiner als 0,1 aufweist und eine geringe Viskosität aufweist.

Dabei ist die Benetzungsvorrichtung 73 der Reinigungseinheit 67 in bevorzugt Bandlaufrichtung nachgeordnet ist.

Die Figur 6 zeigt, dass das Band 61 zwischen dem Beschichtungsmaterial 16 und einer Wandung 69 des Materialkanals 15 in dem Materialkanal 15 angeordnet ist und durch diesen dort führbar ist.

Dabei ist es besonders vorteilhaft, wenn das Band 61 zwischen der Funktionsschicht 70 des Beschichtungsmaterials 16 und einer Wandung 69 des Materialkanals 15 in dem Materialkanal 15 angeordnet und durch diesen führbar ist. So ist es vorteilhaft, wenn das Band 15 beabstandet von dem Beschichtungsmaterial 16 durch den Materialkanal geführt ist, so dass nicht permanent Masse der Funktionsschicht auf das Band übertragen wird. Dabei kann das Band 61 zur besseren Führung in Kontakt mit der Wandung 69 des Materialkanals 15 sein.

Das Band 61 ist dabei bevorzugt einteilig ausgebildet oder es kann auch mehrteilig ausgebildet sein. Dazu kann das Band 61 einen Träger und gegebenenfalls eine Beschichtung aufweisen. Zur besseren Dauerhaltbarkeit weist das Band oder der Träger eine Faserstruktur, wie ein Gewebe, auf. Darauf kann das Band, der Träger eine Beschichtung aufweisen.

Das Band, der Träger und/oder insbesondere die Beschichtung ist dabei bevorzugt aus PTFE ausgebildet oder weist PTFE auf. Das Band oder der Träger, wie beispielsweise das Gewebe, können auch aus stabileren Materialien gefertigt sein.

Zur geeigneten Führung und Durchführung des Bandes weist das Band 61 eine Dicke von etwa 0,05 mm bis 0,3 mm auf, vorzugsweise von etwa 0,1 mm.

Damit das Band 61 sich nicht im Mikrowellenfeld zu sehr aufheizt, weist es einen Absorptionskoeffizienten für Mikrowellenstrahlung von 915MHz, 2,45 GHz oder 5,8 GHz auf, der vorzugsweise kleiner als 0,1 ist.

Das Ausführungsbeispiel der Figur 7 weist im Wesentlichen die gleichen Eigenschaften auf, wie das Ausführungsbeispiel der Figur 6, mit dem Unterschied, dass das Band 62 nicht endlos umläuft, sondern zwischen zwei Rollen 71, 72 hin und her läuft. Dabei ist das Band 62 auf eine der Rollen 71 oder 72 aufwickelbar und es ist von der anderen der Rolle 72 oder 71 abwickelbar.

Die Steuerung des Bandes erfolgt dabei bevorzugt derart, das Band 61, 62 in Laufrichtung des Beschichtungsmaterials oder entgegen der Laufrichtung des Beschichtungsmaterials 16 durch den Materialkanal 15 antreibbar ist oder alternativ auch alternierend gesteuert wird, wie insbesondere bei dem Band 62. Die Vorschubgeschwindigkeit des Bands beträgt zwischen 0,1 mm/s und 500 mm/s, vorzugsweise 10 mm/s.

Bei einem offenen Band kann das Band mit der Vorschubgeschwindigkeit vollständig durch den Materialkanal geführt werden, wobei es anschließend mit einer hohen Geschwindigkeit von ca. 100 mm/s bis 1000 mm/s zurückgespult werden kann.

Ist eine Mehrzahl von Materialkanälen 15 vorgesehen, so kann für jeweils einen Materialkanal 15 ein gesondertes Band vorgesehen sein oder es ist ein Band 61, 62 für alle Materialkanäle 15 gesamtheitlich vorgesehen, welches nacheinander durch die Materialkanäle führbar ist.

Weiterhin ist optional eine Benetzungsvorrichtung 73 vorgesehen, mittels welcher das Band 61, 62 mit einem Trennmittel benetzbar ist, um eine Anhaftung auf dem Band derart zu erreichen, dass die aufnehmbare Verschmutzung wieder gut vom Band 61, 62 lösbar ist. Als Benetzungsmaterial kann ein fluides Material verwendet werden, wie beispielswiese Silikonöl oder ein anderes Material, welches gute Benetzungseigenschaften für PTFE aufweist, einen kleinen Absorptionskoeffizienten von kleiner als 0,1 aufweist und eine geringe Viskosität aufweist.

Dabei kann optional eine Benetzungsvorrichtung 73 vorgesehen sein, welche beispielsweise der Reinigungseinheit 67 in Bandlaufrichtung nachgeordnet sein könnte. Allerdings könnte auf die Benetzungsvorrichtung im Falle des offenen Bandes auch verzichtet werden.

Die oben bereits erwähnte Spülvorrichtung dient dazu, den Materialkanal mit einem Fluid zu spülen. Dabei ist es besonders vorteilhaft, wenn die Spülvorrichtung das Fluid, wie insbesondere Luft, zwischen die Funktionsschicht und das Band 61, 62 leitet.

Weiterhin optional ist eine Überwachungsvorrichtung 75, mittels welcher das Band 61, 62 überwachbar ist, wie insbesondere auf Beschädigungen überwachbar ist. Diese Vorrichtung ist insbesondere eine optische Überwachungsvorrichtung mit einer Kamera, deren Bilder auswertbar sind, um eine Beschädigung des Bands zu erkennen.

## Patentansprüche

1. Vorrichtung (1) zur Erwärmung einer Funktionsschicht (2) eines Beschichtungsmaterials (3), wie einer Oberflächenbeschichtung oder eines Kantenbandes, zum Aufbringen des Beschichtungsmaterials auf eine Fläche eines Werkstücks, mit einer Mikrowellenquelle (4), einem Applikator (5,10) und einem Mikrowellenkanal (6) zur Zuführung der in der Mikrowellenquelle (4) erzeugten Mikrowellenstrahlung zu dem Applikator (5,10), wobei in dem Applikator (5,10) ein Mikrowellenfeld aufgrund der zugeführten Mikrowellenstrahlung erzeugbar ist, wobei der Applikator (5,10) zumindest einen Materialkanal (7) aufweist, welcher den Applikator (5,10) durchquert und durch welchen das Beschichtungsmaterial (3) durchführbar ist, so dass die Funktionsschicht (2) des Beschichtungsmaterials (3) im Mikrowellenfeld innerhalb des Applikators (5,10) erwärmbar oder aktivierbar ist, wobei der Materialkanal (7) eine Einlassöffnung und eine Auslassöffnung für das durch den Materialkanal (7) durchzuführende Beschichtungsmaterial (3) aufweist, **dadurch gekennzeichnet, dass** eine Reinigungsvorrichtung (60) zur Entfernung von Verschmutzungen aus dem Materialkanal (7) vorgesehen ist und wobei eine Spülvorrichtung vorgesehen ist, mittels welcher der Materialkanal mit einem Fluid spülbar ist.

2. Vorrichtung (1) nach Anspruch 1, **dadurch gekennzeichnet, dass** die Reinigungsvorrichtung (60) ein durch den Materialkanal (7) durchlaufendes Band (61) aufweist, welches mittels einer Antriebsvorrichtung durch den Materialkanal (7) transportierbar ist.

3. Vorrichtung (1) nach Anspruch 1 oder 2, **dadurch gekennzeichnet, dass** die Reinigungsvorrichtung (60) eine Reinigungseinheit (67) aufweist, mittels welcher Verschmutzungen von dem Band (61) entfernbar sind.

4. Vorrichtung (1) nach Anspruch 3, **dadurch gekennzeichnet, dass** die Reinigungseinheit (67) ein Abstreifer (68) ist, an welchem das Band (61) vorbei geführt wird, so dass die Verschmutzung vom Band (61) abstreifbar ist.

5. Vorrichtung (1) nach einem der vorhergehenden Ansprüche, **dadurch gekennzeichnet, dass** das Band (61) ein endlos umlaufendes geschlossenes Band oder ein offenes Band ist.

6. Vorrichtung (1) nach einem der vorhergehenden Ansprüche, **dadurch gekennzeichnet, dass** das Band (61) zwischen dem Beschichtungsmaterial (3) und einer Wandung des Materialkanals (7) in dem Materialkanal (7) angeordnet und durch diesen führbar ist.

7. Vorrichtung (1) nach einem der vorhergehenden Ansprüche, **dadurch gekennzeichnet, dass** das Band (61) zwischen der Funktionsschicht (2) des Beschichtungsmaterials (3) und einer Wandung des Materialkanals (7) in dem Materialkanal (7) angeordnet und durch diesen führbar ist.

8. Vorrichtung (1) nach Anspruch 6 oder 7, **dadurch gekennzeichnet, dass** das Band (61) in Kontakt mit der Wandung des Materialkanals (7) ist.

9. Vorrichtung (1) nach einem der vorhergehenden Ansprüche, **dadurch gekennzeichnet, dass** das Band (61) beabstandet von dem Beschichtungsmaterial (3) geführt ist.

10. Vorrichtung (1) nach einem der vorhergehenden Ansprüche, **dadurch gekennzeichnet, dass** das Band (61) einen Träger und gegebenenfalls eine Beschichtung aufweist.

11. Vorrichtung (1) nach Anspruch 10, **dadurch gekennzeichnet, dass** das Band (61) oder der Träger eine Faserstruktur aufweist.

12. Vorrichtung (1) nach Anspruch 10 oder 11, **dadurch gekennzeichnet, dass** das Band (61), der Träger oder die Beschichtung aus PTFE besteht oder PTFE aufweist.

13. Vorrichtung (1) nach einem der vorhergehenden Ansprüche, **dadurch gekennzeichnet, dass** das Band (61) eine Dicke von etwa 0,05 mm bis 0,3 mm hat, vorzugsweise etwa 0,1 mm.

14. Vorrichtung (1) nach einem der vorhergehenden Ansprüche, **dadurch gekennzeichnet, dass** das Band (61) einen Absorptionskoeffizienten für Mikrowellenstrahlung von 2,45 GHz oder 5,8 GHz von kleiner als 0,1 hat.

15. Vorrichtung (1) nach einem der vorhergehenden Ansprüche, **dadurch gekennzeichnet, dass** das Band (61) im Kreis umlaufend antreibbar ist.

16. Vorrichtung (1) nach einem der vorhergehenden Ansprüche 1 bis 14, **dadurch gekennzeichnet, dass** zwei Rollen vorgesehen sind, wobei das Band auf eine Rolle aufwickelbar ist und von der anderen Rolle abwickelbar ist.

17. Vorrichtung (1) nach einem der vorhergehenden Ansprüche, **dadurch gekennzeichnet, dass** eine Mehrzahl von Materialkanälen (7) vorgesehen ist, wobei für jeweils einen Materialkanal (7) ein Band vorgesehen ist oder ein Band für alle Materialkanäle (7).

18. Vorrichtung (1) nach einem der vorhergehenden Ansprüche, **dadurch gekennzeichnet, dass** eine Benetzungsvorrichtung vorgesehen ist, mittels welcher das Band mit einem Trennmittel benetzbar ist.

19. Vorrichtung (1) nach einem der vorhergehenden Ansprüche, **dadurch gekennzeichnet, dass** die Benetzungsvorrichtung der Reinigungseinheit in Bandlaufrichtung nachgeordnet ist.

20. Vorrichtung (1) nach einem der vorhergehenden Ansprüche, **dadurch gekennzeichnet, dass** die Spülvorrichtung das Fluid, wie insbesondere Luft, zwischen die Funktionsschicht und das Band leitet.

21. Vorrichtung (1) nach einem der vorhergehenden Ansprüche, **dadurch gekennzeichnet, dass** das Band in Laufrichtung des Beschichtungsmaterials oder entgegen der Laufrichtung des Beschichtungsmaterials durch den Materialkanal antreibbar ist.

22. Vorrichtung (1) nach einem der vorhergehenden Ansprüche, **dadurch gekennzeichnet, dass** eine Überwachungsvorrichtung vorgesehen ist, mittels welcher das Band überwachbar ist, wie insbesondere auf Beschädigungen überwachbar ist.

## Claims

1. A device (1) for heating a functional layer (2) of a coating material (3), such as a surface coating or an edge band, for applying the coating material to a surface of a workpiece, with a microwave source (4), an applicator (5, 10) and a microwave channel (6) for guiding the microwave radiation generated in the microwave source (4) to the applicator (5, 10), wherein a microwave field can be generated in the applicator (5, 10) due to the guided microwave radiation, wherein the applicator (5, 10) has at least one material channel (7) which passes through the applicator (5, 10) and through which the coating material (3) can be guided, so that the functional layer (2) of the coating material (3) can be heated or activated in the microwave field within the applicator (5, 10), wherein the material channel (7) has an inlet opening and an outlet opening for the coating material (3) to be guided through the material channel (7), **characterised in that** a cleaning device (60) for removing dirt from the material channel (7) is provided and wherein a flushing device is provided by means of which the material channel can be flushed with a fluid.

2. The device (1) according to claim 1, **characterised in that** the cleaning device (60) has a band (61) which runs through the material channel (7) and which can be transported through the material channel (7) by means of a drive device.

3. The device (1) according to claim 1 or 2, **characterised in that** the cleaning device (60) has a cleaning unit (67) by means of which dirt can be removed from the band (61).

4. The device (1) according to claim 3, **characterised in that** the cleaning unit (67) is a stripper (68) past which the band (61) is guided so that the dirt can be stripped off the band (61).

5. The device (1) according to one of the preceding claims, **characterised in that** the band (61) is an endlessly circulating closed band or an open band.

6. The device (1) according to one of the preceding claims, **characterised in that** the band (61) is arranged between the coating material (3) and a wall of the material channel (7) in the material channel (7) and can be guided therethrough.

7. The device (1) according to one of the preceding claims, **characterised in that** the band (61) is arranged between the functional layer (2) of the coating material (3) and a wall of the material channel (7) in the material channel (7) and can be guided therethrough.

8. The device (1) according to claim 6 or 7, **characterised in that** the band (61) is in contact with the wall of the material channel (7).

9. The device (1) according to one of the preceding claims, **characterised in that** the band (61) is guided in a manner spaced apart from the coating material (3) .

10. The device (1) according to one of the preceding claims, **characterised in that** the band (61) has a carrier and possibly a coating.

11. The device (1) according to claim 10, **characterised in that** the band (61) or the carrier has a fibre structure.

12. The device (1) according to claim 10 or 11, **characterised in that** the Band (61), the carrier or the coating consists of PTFE or has PTFE.

13. The device (1) according to one of the preceding claims, **characterised in that** the band (61) has a thickness of about 0.05 mm to 0.3 mm, preferably about 0.1 mm.

14. The device (1) according to one of the preceding claims, **characterised in that** the band (61) has an absorption coefficient for microwave radiation of 2.45 GHz or 5.8 GHz or less than 0.1.

15. The device (1) according to one of the preceding claims, **characterised in that** the band (61) can be driven circulating in a circle.

16. The device (1) according to one of the preceding claims 1 to 14, **characterised in that** two rolls are provided, wherein the band can be rolled onto a roll and can be rolled from the other roll.

17. The device (1) according to one of the preceding claims, **characterised in that** a plurality of material channels (7) is provided, wherein one band is provided for one respective material channel (7) or one band for all material channels (7).

18. The device (1) according to one of the preceding claims, **characterised in that** a wetting device is provided by means of which the band can be wetted with a separating agent.

19. The device (1) according to one of the preceding claims, **characterised in that** the wetting device is arranged downstream of the cleaning device in the running direction of the band.

20. The device (1) according to one of the preceding claims, **characterised in that** the flushing device guides the fluid, such as in particular air, between the functional layer and the band.

21. The device (1) according to one of the preceding claims, **characterised in that** the band can be driven through the material channel in the running direction of the coating material or against the running direction of the coating material.

22. The device (1) according to one of the preceding claims, **characterised in that** a monitoring device is provided by means of which the band can be monitored, such as in particular for damage.

## Revendications

1. Dispositif (1) servant au chauffage d'une couche fonctionnelle (2) d'un matériau de revêtement (3), comme d'un revêtement de surface ou d'une bande de chant, ledit dispositif servant à l'application du matériau de revêtement sur une surface d'une pièce d'usinage et comprenant une source de micro-ondes (4), un applicateur (5, 10) et un canal à micro-ondes (6) servant à l'acheminement du rayonnement micro-onde produit dans la source de micro-ondes (4) et fourni à l'applicateur (5, 10), où un champ à micro-ondes peut être produit dans l'applicateur (5, 10), en raison du rayonnement micro-onde fourni, où l'applicateur (5, 10) présente au moins un canal de matériau (7), canal qui traverse l'applicateur (5, 10) et canal par lequel peut passer le matériau de revêtement (3), de sorte que la couche fonctionnelle (2) du matériau de revêtement (3) peut être chauffée ou activée, dans le champ à micro-ondes, à l'intérieur de l'applicateur (5, 10), où le canal de matériau (7) présente une ouverture d'entrée et une ouverture de sortie pour le matériau de revêtement (3) devant passer par le canal de matériau (7), **caractérisé en ce qu'**il est prévu un dispositif de nettoyage (60) servant à l'élimination de salissures provenant du canal de matériau (7) et où il est prévu un dispositif de rinçage au moyen duquel le canal de matériau peut être rincé avec un fluide.

2. Dispositif (1) selon la revendication 1, **caractérisé en ce que** le dispositif de nettoyage (60) présente une bande (61) passant à travers le canal de matériau (7), bande qui peut être transportée à travers le canal de matériau (7), au moyen d'un dispositif d'entraînement.

3. Dispositif (1) selon la revendication 1 ou 2, **caractérisé en ce que** le dispositif de nettoyage (60) présente une unité de nettoyage (67) au moyen de laquelle peuvent être éliminées des salissures provenant de la bande (61).

4. Dispositif (1) selon la revendication 3, **caractérisé en ce que** l'unité de nettoyage (67) est un racleur (68) devant lequel est guidée la bande (61), de sorte que les salissures de la bande (61) peuvent être éliminées par raclage.

5. Dispositif (1) selon l'une quelconque des revendications précédentes, **caractérisé en ce que** la bande (61) est une bande fermée tournant sans fin ou une bande ouverte.

6. Dispositif (1) selon l'une quelconque des revendications précédentes, **caractérisé en ce que** la bande (61) est disposée, dans le canal de matériau (7), entre le matériau de revêtement (3) et une paroi du canal de matériau (7), canal à travers lequel ladite bande peut être guidée.

7. Dispositif (1) selon l'une quelconque des revendications précédentes, **caractérisé en ce que** la bande (61) est disposée, dans le canal de matériau (7), entre la couche fonctionnelle (2) du matériau de revêtement (3) et une paroi du canal de matériau (7), canal à travers lequel ladite bande peut être guidée.

8. Dispositif (1) selon la revendication 6 ou 7, **caractérisé en ce que** la bande (61) est en contact avec la paroi du canal de matériau (7).

9. Dispositif (1) selon l'une quelconque des revendications précédentes, **caractérisé en ce que** la bande (61) est guidée en étant à distance du matériau de revêtement (3).

10. Dispositif (1) selon l'une quelconque des revendications précédentes, **caractérisé en ce que** la bande (61) présente un support et, le cas échéant, un revêtement.

11. Dispositif (1) selon la revendication 10, **caractérisé en ce que** la bande (61) ou le support présente une structure fibreuse.

12. Dispositif (1) selon la revendication 10 ou 11, **caractérisé en ce que** la bande (61), le support ou le revêtement se composent de PTFE ou présentent du PTFE.

13. Dispositif (1) selon l'une quelconque des revendications précédentes, **caractérisé en ce que** la bande (61) a une épaisseur comprise entre 0,05 mm et 0,3 mm environ, étant de préférence égale à 0,1 mm environ.

14. Dispositif (1) selon l'une quelconque des revendications précédentes, **caractérisé en ce que** la bande (61) a un coefficient d'absorption inférieur à 0,1 pour un rayonnement micro-onde de 2,45 GHz ou de 5,8 GHz.

15. Dispositif (1) selon l'une quelconque des revendications précédentes, **caractérisé en ce que** la bande (61) peut être entraînée en tournant dans le circuit.

16. Dispositif (1) selon l'une quelconque des revendications précédentes 1 à 14, **caractérisé en ce qu'**il est prévu deux rouleaux, où la bande peut être enroulée sur un rouleau et peut être déroulée à partir de l'autre rouleau.

17. Dispositif (1) selon l'une quelconque des revendications précédentes, **caractérisé en ce qu'**il est prévu une pluralité de canaux de matériau (7), où il est prévu une bande respectivement pour un canal de matériau (7), ou bien une bande pour tous les canaux de matériau (7).

18. Dispositif (1) selon l'une quelconque des revendications précédentes, **caractérisé en ce qu'**il est prévu un dispositif de mouillage au moyen duquel la bande peut être mouillée avec un agent de séparation.

19. Dispositif (1) selon l'une quelconque des revendications précédentes, **caractérisé en ce que** le dispositif de mouillage est disposé, dans la direction de défilement de la bande, en aval de l'unité de nettoyage.

20. Dispositif (1) selon l'une quelconque des revendications précédentes, **caractérisé en ce que** le dispositif de rinçage dirige le fluide, comme en particulier l'air, entre la couche fonctionnelle et la bande.

21. Dispositif (1) selon l'une quelconque des revendications précédentes, **caractérisé en ce que** la bande peut être entraînée, à travers le canal de matériau, dans la direction de déplacement du matériau de revêtement, ou bien dans le sens opposé à la direction de déplacement du matériau de revêtement.

22. Dispositif (1) selon l'une quelconque des revendications précédentes, **caractérisé en ce qu'**il est prévu un dispositif de surveillance au moyen duquel la bande peut être surveillée, telle qu'elle peut être surveillée en particulier concernant des dégradations.
